# EUROPÄISCHE PATENTSCHRIFT

(11) **EP 4 139 582 B1**
(45) Veröffentlichungstag und Bekanntmachung des Hinweises auf die Patenterteilung: **27.12.2023**
(21) Anmeldenummer: 21718005.8
(22) Anmeldetag: 25.03.2021
(51) Int. Cl.: F16D 25/08, F16B 21/04, F15B 15/14, F16J 1/12

(54) **GEBEREINHEIT FÜR EINE DRUCKMITTELBETÄTIGTE KUPPLUNG MIT EINEM BAJONETTVERSCHLUSS EINES KOLBENS UND EINER KOLBENSTANGE**
MASTER CYLINDER FOR A FLUID-ACTUATED CLUTCH WITH A BAYONET CONNECTION OF THE PISTON AND THE PISTON ROD
VÉRIN ÉMETTEUR POUR UN EMBRAYAGE ACTIONNÉ PAR FLUIDE AVEC FIXATION À BAÏONNETTE DU PISTON ET DE LA TIGE DE PISTON

(30) Priorität: 24.04.2020 DE 102020111174
(43) Veröffentlichungstag der Anmeldung: 01.03.2023
(73) Patentinhaber: Schaeffler Technologies AG & Co. KG, 91074 Herzogenaurach (DE)
(72) Erfinder: KUTZ, Hansjörg, 76137 Karlsruhe (DE); FRANZ, Viktor, 76137 Karlsruhe (DE); HEYNE, Marko, 77830 Bühlertal (DE)
(86) Internationale Anmeldenummer: PCT/DE2021/100294
(87) Internationale Veröffentlichungsnummer: WO 2021/213582

(56) Entgegenhaltungen:
- WO-A1-2015/131889
- DE-B3-102013 213 888
- US-A1- 2020 003 236

## Beschreibung

Die Erfindung betrifft einen Aktor sowie eine den Aktor umfassende Drehmoment-Übertragungseinrichtung, die insbesondere als eine Reibkupplung ausgeführt ist.

Zur Übertragung von Drehmoment von einem Antriebsaggregat auf einen Antriebsstrang eines Kraftfahrzeugs sind Reibkupplungen bekannt. Derartige Reibungskupplungen sind oftmals im Normalzustand nicht-eingerückte Kupplungen bzw. geschlossene Kupplungen. Das bedeutet, dass sie mit einem Ausrücksystem betätigt werden müssen, um geöffnet zu werden und somit den Drehmoment-Übertragungspfad zu unterbrechen.

Dafür können sogenannte Zentralausrücker verwendet werden, wie z.B. elektrische Zentralausrücker oder hydraulisch funktionierende Zentralausrücker. Diese haben einen Kolben, der sich unter Beaufschlagung durch einen Fluiddruck verschieben kann und derart die Verlagerung eines Anpresselements einer angeschlossenen Kupplung erzeugen kann.

Aus der WO 2015/117 612 A2 ist ein Aktor mit Planetenwälzgewindespindel bekannt, wobei in einem Spindelgetriebe die Spindel drehfest und translatorisch verschiebbar gelagert ist. Die translatorisch bewegte Spindel bewirkt eine Verschiebung des mit der Spindel gekoppelten Kolbens, zwecks Anbringung eines Fluiddrucks. An dem dem Kolben zugewandten Ende der Spindel ist ein Druckstück drehfest angeordnet, welches als Schnittstelle zu dem Kolben dient.

Aus der US 2020/0003236 A1 ist es bekannt einen Kolben über eine Bajonettverbindung mit einer Kolbenwelle zu verbinden.

Aus der gattungsbildenden DE 10 2013 213888 B3 ist eine Steckverbindung zwischen einem Spindelkopf und einem Kolben bekannt.

Aus der DE 10 2016 221 159 A1 ist ein Aktor zur Betätigung einer Kupplung, insbesondere einer Reibungskupplung eines Kraftfahrzeugs, bekannt, der ein translatorisch verlagerbares Antriebsglied, insbesondere eine Spindel eines Spindeltriebes, und einen Kolben einer Kolben-Zylinder-Einheit umfasst, wobei das Antriebsglied mit dem Kolben mechanisch gekoppelt ist. Der Aktor weist an dem dem Kolben zugewandten Ende des Antriebsglieds eine radiale Auskragung auf. Zudem weist der Aktor eine aus mehreren Einzelschalen zusammengesetzte und mit dem Kolben verbundene Schaleneinheit auf, die die radiale Auskragung zumindest abschnittsweise axial und zumindest abschnittsweise radial umschließt. Diese Ausgestaltung dient in erster Linie der erleichterten Montage, führt jedoch auch dazu, dass lange Toleranzketten bestehen, die die Erfassung der axialen Position des Kolbens unsicher machen.

Da fertigungs- und oder montagebedingt nicht immer gewährbar ist, dass die Spindelachse und die Zylinderachse toleranzbedingt nicht koaxial übereinander liegen, muss der Kolben Radialversatz ausgleichen können, um die Dichtheit bzw. Abstand zwischen Dichtsitz und Zylinderwandung zu gewährleisten. Der dafür notwendige radiale Freiheitsgrad verursacht axiales Spiel in der Befestigung des Kolbens an der Spindel und zwischen Dichtung und Kolben.

Insgesamt bewirkt die Verwendung vieler, in axialer Richtung miteinander gekoppelter Bauteile lange Toleranzketten, so dass radiales und auch axiales Spiel nicht ausgeschlossen werden kann. Zudem sind derartige Konstruktionen fertigungs-und montagetechnisch relativ aufwendig. Aufgrund dessen, dass nicht ausgeschlossen werden kann, dass ein relativ großes axiales Spiel besteht, ist auch die jeweilige aktuelle Position des Kolbens und somit auch das vom Kolben bewegte FluidVolumen nicht genau bestimmbar, sodass letztendlich auch der Zustand der jeweiligen betätigten Kupplung mit einer gewissen Unsicherheit behaftet ist.

Hiervon ausgehend liegt der vorliegenden Erfindung die Aufgabe zugrunde, einen Aktor und eine damit ausgestattete Drehmoment-Übertragungseinrichtung zur Verfügung zu stellen, die in einfacher und kostengünstiger sowie bauraumsparender Bauweise die exakte Positionierung des Kolbens des Aktors und demzufolge die exakte Betätigung einer angeschlossenen Kupplung gewährleisten.

Diese Aufgabe wird durch den erfindungsgemäßen Aktor nach Anspruch 1 sowie durch die erfindungsgemäße Drehmoment-Übertragungseinrichtung nach Anspruch 5 gelöst. Vorteilhafte Ausführungsformen des erfindungsgemäßen Aktors sind in den Unteransprüchen 2-4 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft einen Aktor zur Betätigung einer Drehmoment-Übertragungseinrichtung, insbesondere einer Reibkupplung. Dieser Aktor umfasst ein translatorisch verlagerbares Antriebsglied und einen verschiebbaren Kolben einer Kolben-Zylinder-Einheit zwecks Erzeugung eines Fluid-Volumenstroms zur Betätigung der Drehmoment-Übertragungseinrichtung. Das Antriebsglied und der Kolben in axialer Richtung sind lediglich über Formelemente des Kolbens sowie des Antriebsgliedes selbst formschlüssig miteinander fest verbunden, zwecks Verschiebung des Kolbens mittels des Antriebsglieds. Insbesondere dient der Aktor zur Betätigung einer Reibkupplung zwecks Verlagerung derer Anlageelemente, mit denen reibschlüssig Drehmoment übertragen werden kann.

Die axiale Richtung ist dabei entlang der Vorschubachse des Antriebsgliedes und des Kolbens definiert. Vorzugsweise ist die mechanische Verbindung zwischen dem Antriebsglied und dem Kolben im Wesentlichen und insbesondere völlig ohne axiales Spiel ausgeführt. Das bedeutet, dass der Kolben wird ohne Kopplung mit weiteren Bauteile durch seine Fixierung am Antriebsglied axial und radial gesichert bzw. freigestellt. Mit der Funktionsintegration in ein einzelnes Bauteil in Form des Kolbens werden kleine Toleranzen und kurze Toleranzketten erreicht. Daraus ergeben sich kleine Spiele zwischen den Bauteilen und damit geringere Abweichungen zwischen der Position des Antriebsgliedes und des Kolbens.

Dabei ist die Verwendung von Zwischenlagen oder Zwischenschichten zwischen dem Antriebsglied und dem Kolben nicht ausgeschlossen. Jedoch erfolgt die Übertragung einer axialen Kraft zwischen dem Antriebsglied und dem Kolben über die Formelemente, die vom Antriebsglied und vom Kolben ausgebildet sind bzw. deren integrale Bestandteile sind, so dass keine Verwendung von weiteren, das Antriebsglied mit den Kolben koppelnden Verbindungselementen notwendig ist. Derart ist im Kraftübertragungspfad zwischen dem Antriebsglied und dem Kolben nur ein Minimum von miteinander wirkenden Bauteilen vorhanden, so dass die Summe der Toleranzen dieser Bauteile sehr gering ist und entsprechend die axiale Positionierung des Kolbens mit sehr hoher Genauigkeit erfolgen kann.

Erfindungsgemäß ist vorgesehen, dass die die mechanische Verbindung realisierenden Formelemente des Kolbens und des Antriebsgliedes Bestandteile eines Bajonettverschlusses sind, mit dem der Kolben an dem Antriebsglied fixiert ist. Ein Bajonettverschluss ist eine mechanische Verbindung zweier im Wesentlichen zylindrischer Teile, die die beiden Seiten des Bajonettverschlusses ausbilden. Die Verbindung wird erreicht durch Ineinanderstecken und gegensätzliche Verdrehung der beiden Seiten, so dass die beiden Seiten oder Teile entlang einer Längsachse des Bajonettverschlusses, die der Rotationsachse bei der Verdrehung entspricht, verbunden sind.

In der erfindungsgemäßen Ausführungsform ist das Antriebsglied eine rotationsfest angeordnete und translatorisch verlagerbare Spindel eines Spindeltriebes, insbesondere eines Planetenwälzgetriebes.

Dabei weist die Spindel vorzugsweise einen Spindelkopf auf, der einen Endbereich des Antriebsgliedes ausbildet, wobei eine Seite des Bajonettverschlusses durch den Spindelkopf ausgebildet ist. Die andere Seite des Bajonettverschlusses ist durch den Kolben ausgebildet, so dass die mechanische Fixierung des Kolbens an dem Spindelkopf erfolgt. Der Spindelkopf ist dabei ein Element, welches an dem Gewindeschaft der Spindel fixiert ist.

Die Position des Spindelkopfes kann dabei insbesondere mittels eines Rotorlagesensors ermittelt werden, wobei die Spindel Bestandteil eines Planetenwälzgewindetriebes ist, welches eine angetriebene, rotierbare Spindelmutter umfasst, die die drehfeste Spindel axial vorwärts bewegt. Durch einen Rotorlagesensor und aufgrund der sehr geringen axialen Toleranzen bzw. des geringen axialen Spiels ist es in optimaler Weise möglich, in Abhängigkeit der ermittelten Umdrehungen die aktuelle Position des Kolbens zu bestimmen, um entsprechend exakt einen Druckaufbau bzw. Druckabbau und ein verschobenes FluidVolumen zu ermitteln.

Erfindungsgemäß weist der Aktor ein Armierungselement auf, welches die beiden Seiten des Bajonettverschlusses in ihren Umfangspositionen in Bezug zueinander kraft- und/oder formschlüssig in Bezug zueinander fixiert. Durch das Armierungselement wird sichergestellt, dass der Bajonettverschluss sich nicht in unbeabsichtigter Weise lösen kann.

Dabei weist der Bajonettverschluss an beiden Seiten jeweils wenigstens ein Eingriffelement auf und ein jeweiliges Eingriffelement einer Seite ist dazu eingerichtet, in ein Eingriffelement der anderen Seite des Bajonettverschlusses einzugreifen oder von dem Eingriffelement der anderen Seite eingegriffen zu werden, so dass der Bajonettverschluss wenigstens ein Paar von ineinander greifenden Eingriffelementen aufweist.

Das Armierungselement weist dann einen Ringbereich auf, von dem sich in axialer Richtung mehrere Stege erstrecken, wobei die Stege derart angeordnet sind, dass sie formschlüssig eine Relativ-Drehbewegung der paarweise angeordneten Eingriffelemente blockieren.

Insbesondere umfasst das Armierungselement vier axial vorstehende Stege, die eine Verdrehsicherung des Bajonettverschlusses ausbilden. Zu diesem Zweck können in den beiden Seiten des Bajonettverschlusses vier entsprechende, nach radial innen ausgeführte Nuten vorhanden sein, zur bereichsweisen Aufnahme der Stege, die damit eine zusätzliche Verdrehsicherung ausbilden, so dass keine Rotationsbewegung der einen Seite des Bajonettverschlusses in Bezug zur anderen Seite des Bajonettverschlusses auftreten kann. Aufgrund dessen, dass es für die Integration des Armierungselements im Wesentlichen lediglich einer axialen Einschiebebewegung bedarf, ist trotz Reduktion der verbauten Teile eine einfache Montage möglich.

Die Stege können dabei als Anspritzpunkte des als Spritzgussbauteil ausgeführten Armierungselements ausgebildet sein. Sie weisen höhere Bindenahtfestigkeiten auf und demzufolge eine erhöhte Lebensdauer. Die Anspritzpunkte sind insbesondere an den Stegen an der radial inneren Seite angeordnet, um einen dortigen Passsitz vor einer Verschmutzung zu schützen.

Des Weiteren kann das Armierungselement an der radialen Außenseite mehrere Gleitflächen aufweisen, zur Stützung der dynamischen Dichtlippe des Dichtrings sowie des Schutzes vor Verschleiß bzw. anderweitiger mechanischer Schädigung.

Des Weiteren kann ein erstes Eingriffelement eines Paares einen radialen Vorsprung aufweisen und ein zweites Eingriffelement dieses Paares einen in axialer Richtung ausgebildeten Hinterschnitt aufweisen, der in zumindest einer Umfangsrichtung offen ist, wobei die radiale Weite des durch den Hinterschnitt ausgebildeten Raums größer oder gleich groß ist wie die radiale Erstreckung des Vorsprungs des ersten Eingriffelements, so dass bei einer Relativ-Rotationsbewegung zwischen den Eingriffelementen dieses Paares der Vorsprung des ersten Eingriffelements in den vom Hinterschnitt ausgebildeten Raum einschwenkbar ist.

Der Hinterschnitt kann insbesondere ein mit einem Drehwerkzeug erzeugter radialer Einstich sein und somit nur sehr geringe Fertigungstoleranzen in axialer Richtung aufweisen. Ebenfalls lässt sich der Hinterschnitt in radialer Richtung sehr exakt derart ausbilden.

Insbesondere ist der radiale Vorsprung des ersten Eingriffelements in radialer Richtung durch ein Kreisbogen begrenzt, und der vom Hinterschnitt ausgebildeten Raum hat ebenfalls eine radiale Außenkontur in Form eines Kreisbogens, so dass nach einem Einschwenken des Vorsprungs des ersten Eingriffelements in den Raum des Hinterschnitts des zweiten Eingriffelements der Vorsprung den Raum in radialer Richtung im Wesentlichen ausfüllt.

In spezieller Ausführungsform ist in radialer Richtung ausgehend vom Kreisbogen des Vorsprungs noch wenigstens ein auch als Erhöhung bezeichnetes Andruckelement angeordnet, zur Blockade des Bajonettverschlusses in Umfangsrichtung. Insbesondere kann an den Endbereichen des Kreisbogens des Vorsprungs jeweils ein Andruckelement angeordnet sein.

Dabei kann der Vorsprung eine axiale Breite haben, die der axialen Breite des vom Hinterschnitt ausgebildeten Raums entspricht, so dass der Bajonettverschluss in axialer Richtung spielfrei ausgeführt ist. Die Spielfreiheit wird dann weiter abgesichert, wenn der Vorsprung mit einer axialen Vorspannung im vom Hinterschnitt ausgebildeten Raum angeordnet ist. In diesem Fall bietet es sich an, am Hinterschnitt und/ oder am Vorsprung eine Einschubschräge vorzusehen, die das Eindrehen des Vorsprung in den vom Hinterschnitt ausgebildeten Raum erleichtert.

Der Kolben kann an seiner radialen Außenseite einen Passsitz aufweisen, über welchen der Kolben im Zylinder zentrierbar ist. Zudem kann der Kolben eine Außenfläche aufweisen, die Notlaufeigenschaften im Zylinder aufweist, insbesondere, wenn das Armierungselement und/oder der Dichtring eine definierte Verschleißgrenze erreicht haben, um dann noch wenigstens provisorisch eine Dichtwirkung zu realisieren.

Erfindungsgemäß weist der Kolben radial außen einen ersten radialen Absatz und axial gegenüberliegend einen zweiten radialen Absatz auf. Ein Dichtring ist in der zwischen den beiden Absätze ausgebildeten Nut des Kolbens montiert. Der Kolben nimmt ebenfalls das Armierungselement auf, so dass eine Dichtlippe des Dichtrings in axialer Richtung durch das Armierungselement abgestützt wird.

Der erste radiale Absatz ist insbesondere auf der der mechanischen Verbindung mit dem Antriebsglied axial abgewandten Seite des Kolbens realisiert, zwecks Mitnahme des Dichtringes in einer von einer Spindel-Antriebseinrichtung weg erfolgenden Bewegung des Kolbens.

Der zweite radiale Absatz des Kolbens ist an dessen axial gegenüberliegender Seite angeordnet, zwecks Mitnahme des Dichtringes in einer in Richtung auf die Spindel-Antriebseinrichtung erfolgenden Bewegung des Kolbens.

Die beiden Absätze können durch axiale Anlageflächen des Kolbens realisiert sein. Aufgrund dessen, dass diese Absätze bzw. Anlageflächen integrale Bestandteile des Kolbens sind, weisen sie sehr geringe Toleranzen, insbesondere in ihrem Abstand zueinander, auf. Zwischen den axialen Anlageflächen bildet der Kolben einen Dichtsitz bzw. eine breite, umlaufende Nut aus, zur Aufnahme des Dichtringes. Dadurch wird die Positioniergenauigkeit des Dichtringes stark erhöht, sodass ein reproduzierbarer Druckaufbau möglich ist. Ein weiterer Effekt dieser erfindungsgemäßen Ausführungsform ist, dass der Kolben zusammen mit dem Dichtring eine sehr kompakte Baueinheit und demzufolge bauraumsparend ausgeführt werden kann.

Der Dichtring ist in axialer Richtung durch das in Form eines Ringes ausgeführte Armierungselement abgestützt. So kann z.B. das Armierungselement an seinem radialen Außenbereich einen axial vorstehenden

Anlagebereich aufweisen, der in axialer Richtung an einer radial vorstehenden Dichtlippe des Dichtringes anliegt und dort eine axiale Abstützung der Dichtlippe bewirkt.

Zudem kann der Dichtring an einer axialen Stirnseite auf einem Umfang verteilt mehrere Anlageelemente aufweisen, die der axialen Abstützung des Dichtringes an einem zweiten Absatz des Kolbens dienen. Diese Anlageelemente werden auch als Kronen bezeichnet, die sich axial erstrecken und der toleranzfreien Anlage am Kolben dienen, um den Dichtring am Kolben in axialer Richtung exakt zu positionieren. Insbesondere können diese Anlageelemente eine Federwirkung in axialer Richtung aufweisen, so dass sie im montierten Zustand sicherstellen, dass der Dichtring an einem den Anlageelementen axial gegenüberliegenden Seite befindlichen Absatz des Kolbens anliegen.

Bei einem Verfahren zur Montage des Aktors wird der Kolben mittels des Bajonettverschlusses mit dem Spindelkopf mechanisch fest verbunden, nämlich durch eine Drehung des Kolbens in Bezug zum Spindelkopf. Danach werden die Stege des Armierungselements am bzw. im Bajonettverschluss integriert, insbesondere eingefädelt, um eine Relativ-Rotationsbewegung der beiden Seiten des Bajonettverschlusses zu sperren und derart den Bajonettverschluss zu sichern. Zwecks Blockade des translatorischen Freiheitsgrades des Armierungselements wird dann der Dichtring axial seitlich des Armierungselements zwischen die Absätze bzw. axialen Anlageflächen des Kolbens in die dort ausgebildete Breite, umlaufende Nut eingesetzt. Aufgrund der Elastizität des Dichtringes kann auf einfache Weise eine axiale Sicherung des Armierungselements erfolgen, da dieses in die Kolbennut formschlüssig aufschrumpft.

Des Weiteren wird eine Drehmoment-Übertragungseinrichtung zur Verfügung gestellt, die einen erfindungsgemäßen Aktor zur Realisierung eines Fluid-Volumenstroms zwecks Verlagerung eines axial verschiebbaren Kraftübertragungselements umfasst, um einen Drehmoment-Übertragungspfad mittels der Drehmoment-Übertragungseinrichtung zu öffnen oder zu schließen.

Insbesondere ist die Drehmoment-Übertragungseinrichtung eine Reibkupplung, wobei der Aktor der Übertragung einer Kraft zur axialen Verlagerung eines Reibelements der Drehmoment-Übertragungseinrichtung zwecks reibschlüssiger Übertragung eines Drehmoments dient.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Figur 1: den Zusammenbau aus Spindelkopf, Kolben, Armierungselement und Dichtring in perspektivischer, geschnittener Ansicht,
Figur 2: den Spindelkopf in perspektivischer Ansicht,
Figur 3: den Kolben in perspektivischer Ansicht,
Figur 4: das Armierungselement in perspektivischer Ansicht,
Figur 5: den Dichtring in perspektivischer Ansicht,
Figur 6: den gesamten Aktor in perspektivischer Ansicht,
Figur 7: den Schritt der Montage des Spindelkopfes,
Figur: 8 den Schritt der Montage des Kolbens,
Figur 9: den Schritt der Montage des Armierungselements,
Figur 10: den Schritt der Montage des Dichtringes,
Figur 11: eine weitere Ausführungsform des Verbindungsbereiches zwischen Antriebselement und Kolben des Aktors in geschnittener, perspektivischer Ansicht in teilweiser Explosionsdarstellung, und
Figur 12: den Zusammenbau dieser Ausführungsform in geschnittener, perspektivischer Ansicht.

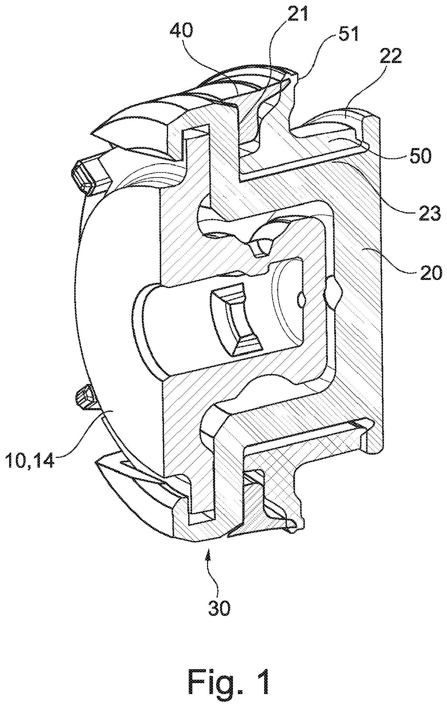

Der Aktor ist im Bereich des Überganges vom Antriebsglied 10 zum Kolben 20 wie in Figur 1 dargestellt ausgebildet. Das Antriebsglied 10 umfasst hier einen Spindelkopf 14, welcher auf einer hier nicht dargestellten Spindel drehfest angeordnet ist. Mit dem Spindelkopf 14 ist in der hier dargestellten Ausführungsform der Kolben 20 unmittelbar mittels eines Bajonettverschlusses 30 gekoppelt. Zwecks Verhinderung einer unbeabsichtigten Lösung des Bajonettverschlusses 30 ist ein Armierungselement 40 angeordnet, welches gleichzeitig eine Dichtlippe 51 eines ebenfalls auf dem Kolben 20 angeordneten Dichtringes 50 in axialer Richtung abstützt.

Der Kolben 20 weist einen ersten radialen Absatz 21 sowie axial gegenüberliegend einen zweiten radialen Absatz 22 auf. Zwischen diesen beiden Absätzen 21, 22 ist der axial elastische Dichtring 50 in er dort ausgebildeten umlaufenden, breiten Nut 23 mit einer axialen Vorspannung montiert, sodass gewährleistet ist, dass der Kolben 20 den Dichtring 50 bei axialer Bewegung ständig mitnimmt.

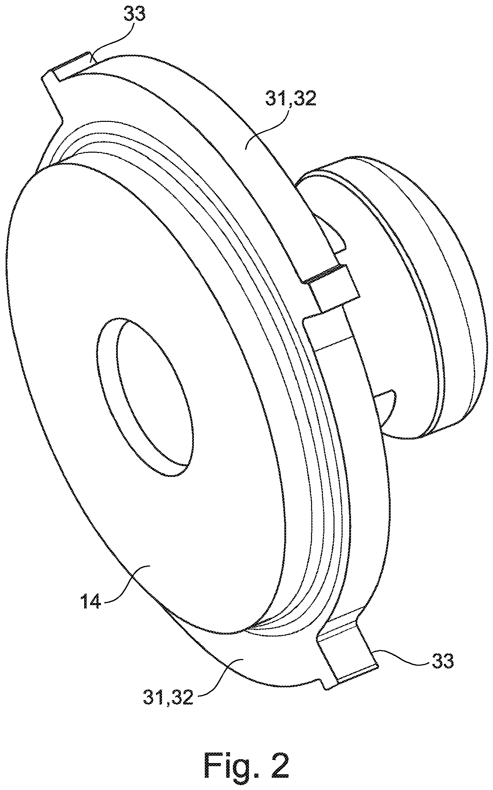

Figur 2 zeigt in perspektivischer Ansicht den Spindelkopf 14. Es ist ersichtlich, dass der Spindelkopf 14 zur Ausbildung des Bajonettverschlusses 30 zwei erste, einander diametral gegenüberliegende Eingriffselemente 31 aufweist, die jeweils durch einen Vorsprung 32 ausgebildet sind, der sich in radialer Richtung erstreckt. In den in Umfangsrichtung befindlichen Endbereichen eines jeweiligen Vorsprungs 32 ist jeweils ein Andruckelement 33 angeordnet.

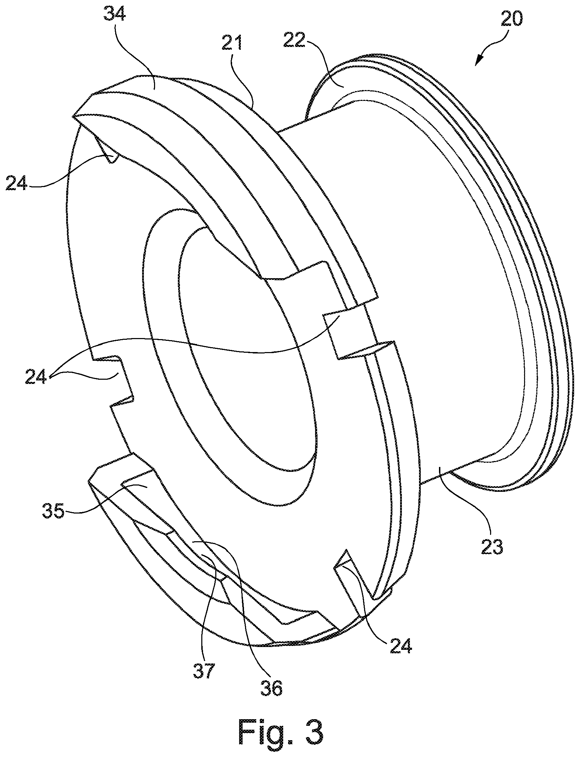

Figur 3 zeigt den Kolben 20 in perspektivischer Ansicht. Es ist ersichtlich, dass der Kolben 2 ebenfalls diametral sich gegenüberliegende zweite Eingriffselemente 34 aufweist. Diese zweiten Eingriffselemente 34 bilden jeweils einen Hinterschnitt 35 aus, die jeweils einen Raum 36 definieren, der wiederum zur Aufnahme eines Vorsprungs 32 eines ersten Eingriffselements 31 des Spindelkopfes 14 dient. Die jeweilige radiale Innenseite 37 des betreffenden Hinterschnitts 35 sowie die radiale Erstreckung der Andruckelemente 33 an den Vorsprüngen 32 sind dabei so bemessen, dass die Andruckelemente 33 an der jeweiligen radialen Innenseite 37 des betreffenden Hinterschnitts 35 entlang gleiten können, um die Relativ-Drehung von Spindelkopf 14 und Kolben zu gewährleisten.

Nach Erreichung der Verschluss-Winkelpositionen von Spindelkopf 14 und Kolben 20 zur Ausbildung des Bajonettverschlusses 30 blockieren die Andruckelemente 33 eine weitere Drehbewegung oder eine rückwärtige Drehbewegung von Spindelkopf 14 und Kolben 20 und sichern somit die Verschlusswirkung des Bajonettverschlusses 30.

In den in Umfangsrichtung befindlichen Endbereichen der Hinterschnitte 35 befinden sich radial eingebrachte Nuten 24, die zur Aufnahme von Stegen 42 eines am Kolben 20 zu befestigenden Armierungselements 40 dienen.

Dabei wird das Armierungselement 40 in Umfangsrichtung auch durch die Andruckelemente 33 formschlüssig gehalten.

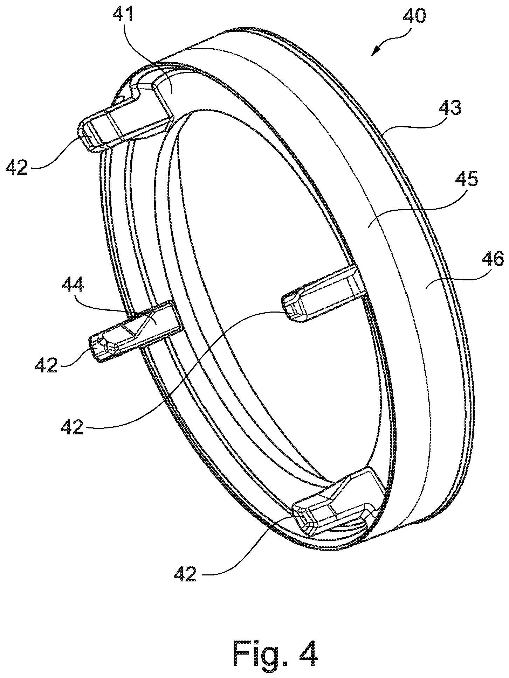

Dieses Armierungselement 40 ist in perspektivischer Ansicht in Figur 4 gezeigt. Es ist ersichtlich, dass sich vier Stege 42 in axialer Richtung von einem Ringbereich 41 erstrecken. Diese Stege 42 dienen dazu, eine Relativ-Rotationsbewegung zwischen dem Kolben 20 und dem Spindelkopf 14 zu verhindern und somit abzusichern, dass der Bajonettverschluss 30 geschlossen ist.

Die Stege 42 weisen an ihren nach radial innen gerichteten Seiten Passsitzflächen 44 auf, um hier eine definierte Anlage am Spindelkopf 41 zu realisieren. An der radialen Außenseite des Ringbereichs 41 sind eine erste Gleitfläche 45 sowie eine zweite Gleitfläche 46 realisiert, die in Abhängigkeit des Zustandes bzw. des Verschleißes der Dichtlippe 51 selbst eine abstützende und/oder abdichtende Wirkung erzielen können. Des Weiteren umfasst das Armierungselement 40 einen axial vorstehenden Anlagebereich 43, der zur Anlage und Abstützung der Dichtlippe 51 des Dichtringes 50, wie sie in Figur 1 dargestellt, dient.

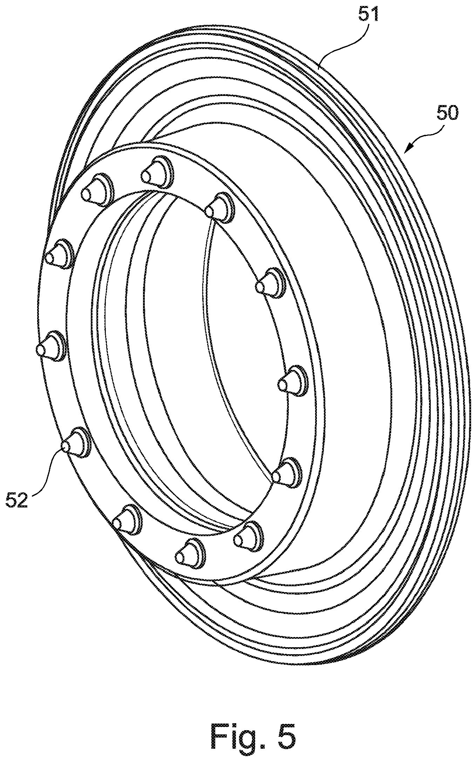

Figur 5 zeigt die Dichtring 50 in perspektivischer Ansicht.

Es ist ersichtlich, dass der Dichtring 50 eine im Wesentlichen radial vorstehende Dichtlippe 51 hat, zur Realisierung einer ausreichenden Abdichtung an der Zylinderlauffläche des Aktors. Weiterhin ist erkennbar, dass in einem axialen Endbereich der Dichtring 50 am Umfang verteilt mehrere Anlageelemente 52 aufweist, die auch als Kronen bezeichnet werden. Diese Anlageelemente 52 weisen eine Federwirkung auf, sodass dadurch der Dichtring 50 unter einer Vorspannung in exakter Weise axial am Kolben 20 positioniert werden kann, so wie es in Figur 1 dargestellt ist.

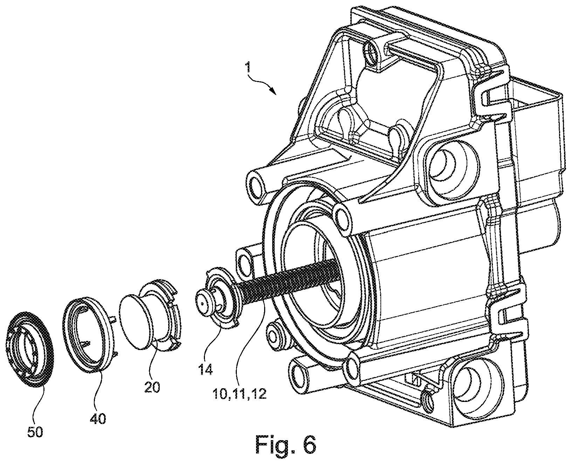

Figur 6 zeigt in perspektivischer Ansicht den gesamten Aktor 1, wobei hier der in Figur 1 dargestellte Zusammenbau in perspektivischer Ansicht dargestellt ist. Es ist hier weiterhin die als Antriebsglied 10 vorgesehene Spindel 11 ersichtlich, an deren axialen Ende des Spindelkopfes 14 montiert ist. Der Kolben 20, das Armierungselement 40 sowie der Dichtring 50 sind dabei entsprechend ihrer MontageReihenfolge gesondert dargestellt.

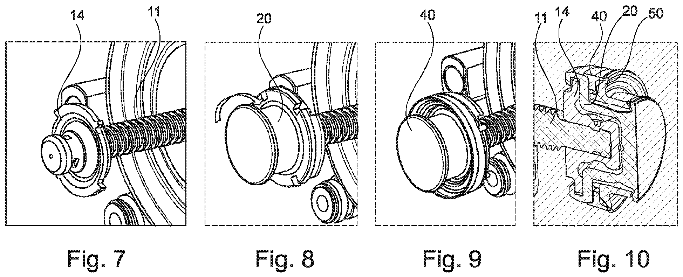

Die Figuren 7-10 zeigen die einzelnen Montageschritte.

Figur 7 stellt dar, dass der Spindelkopf 14 auf das axiale Ende der Spindel 11 und somit am Ende des Gewindeschaftes 12 mit der Spindel 11 fest verbunden ist.

Danach erfolgt gemäß Figur 8 die Montage des Kolbens 20 durch eine hier angedeutete Rotationsbewegung des Kolbens 20, um den Bajonettverschluss 30 herzustellen, wie er in Figur 1 ersichtlich ist.

Figur 9 zeigt dann die Montage des Armierungselements 40 auf dem Kolben 20.

Letztendlich wird, wie in Figur 10 dargestellt, der Dichtring 50 montiert, der in axialer Richtung am Armierungselement 40 anliegt.

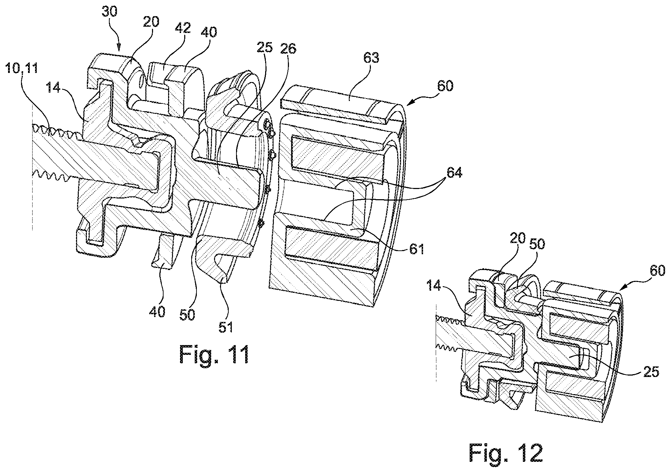

Figuren 11 und 12 zeigen eine weitere Ausführungsform im Bereich der Verbindung des Kolbens 20 mit dem Spindelkopf 14. Es ist hier ersichtlich, dass der Kolben 20 einen koaxial ausgebildeten Zapfen 25 aufweist, der an seiner radialen Außenseite ein Außengewinde 26 hat. Dieser Zapfen 25 bzw. das dort angeordnete Außengewinde 26 dienen der Aufnahme einer Magnetführung 60. Diese Magnetführung 60 umfasst ein Aufnahmeelement 61, welches zur Aufnahme eines in Form eines Hohlzylinders ausgeführten Magneten 62 dient. Die Magnetführung 60 ist an ihrer radialen Innenseite komplementär zum Zapfen 25 des Kolbens 20 ausgebildet, sodass mittels des dort vorhandenen Außengewindes 26 die Magnetführung 60 im auf den Zapfen 25 gesteckten Zustand temporär fixierbar ist. Zwischen dem Zapfen 25 und der Magnetführung 60 bzw. deren Aufnahmeelement 61 ist im montierten Zustand eine Klebung 64 realisiert, um die Magnetführung 60 an dem Kolben 20 zu fixieren. Die Magnetführung 60 bildet des Weiteren eine Mantelfläche 63 aus, mit der ebenfalls Notlaufeigenschaften im Zylinder des Aktors realisiert werden können, gleichzeitig mit einer axialen Führung.

Figur 12 zeigt diese Ausführungsform im montierten Zustand, wobei ersichtlich ist, dass das Aufnahmeelement 61 auf dem Zapfen 25 des Kolbens 20 fixiert ist.

Mit dem hier vorgeschlagenen Aktor und der damit ausgestatteten Drehmoment-Übertragungseinrichtung werden Einrichtungen zur Verfügung gestellt, die in einfacher und kostengünstiger sowie bauraumsparender Bauweise die exakte Positionierung des Kolbens des Aktors und demzufolge die exakte Betätigung einer angeschlossenen Kupplung gewährleisten.

### Bezugszeichenliste

- 1: Aktor
- 10: Antriebsglied
- 11: Spindel
- 12: Gewindeschaft
- 14: Spindelkopf
- 20: Kolben
- 21: erster radialer Absatz
- 22: zweiter radialer Absatz
- 23: umlaufende Nut
- 24: Nut
- 25: Zapfen
- 26: Außengewinde
- 30: Bajonettverschluss
- 31: Erstes Eingriffelement
- 32: Vorsprung
- 33: Andruckelement
- 34: Zweites Eingriffelement
- 35: Hinterschnitt
- 36: Raum
- 37: radiale Innenseite des Hinterschnitts
- 40: Armierungselement
- 41: Ringbereich
- 42: Steg
- 43: axial vorstehender Anlagebereich
- 44: Passsitzfläche
- 45: erste Gleitfläche
- 46: zweite Gleitfläche
- 50: Dichtring
- 51: Dichtlippe
- 52: Anlageelement
- 60: Magnetführung
- 61: Aufnahmeelement
- 62: Magnet
- 63: Mantelfläche
- 64: Klebung

## Patentansprüche

1. Aktor (1) zur Betätigung einer Drehmoment-Übertragungseinrichtung, umfassend ein translatorisch verlagerbares Antriebsglied (10) und einen verschiebbaren Kolben (20) einer Kolben-Zylinder-Einheit zwecks Erzeugung eines Fluid-Volumenstroms zur Betätigung der Drehmoment-Übertragungseinrichtung, wobei das Antriebsglied (10) und der Kolben (20) in axialer Richtung lediglich über Formelemente des Kolbens (20) sowie des Antriebsgliedes (10) selbst formschlüssig miteinander fest verbunden sind, zwecks Verschiebung des Kolbens (20) mittels des Antriebsglieds (10), wobei das Antriebsglied (10) eine rotationsfest angeordnete und translatorisch verlagerbare Spindel (11) eines Spindeltriebes, insbesondere eines Planetenwälzgetriebes, ist, **dadurch gekennzeichnet, dass** die die mechanische Verbindung realisierenden Formelemente des Kolbens (20) und des Antriebsgliedes (10) Bestandteile eines Bajonettverschlusses (30) sind, mit dem der Kolben (20) an dem Antriebsglied (10) fixiert ist,
dass der Aktor ein Armierungselement (40) aufweist, welches die beiden Seiten des Bajonettverschlusses (30) in ihren Umfangspositionen in Bezug zueinander kraft- und/oder formschlüssig in Bezug zueinander fixiert,
dass der Bajonettverschluss (30) an beiden Seiten jeweils wenigstens ein Eingriffelement (31, 34) aufweist und ein jeweiliges Eingriffelement (31, 34) einer Seite dazu eingerichtet ist, in ein Eingriffelement (31, 34) der anderen Seite des Bajonettverschlusses (30) einzugreifen oder von dem Eingriffelement (31, 34) der anderen Seite eingegriffen zu werden, so dass der Bajonettverschluss (30) wenigstens ein Paar von ineinander greifenden Eingriffelementen (31, 34) aufweist, und dass das Armierungselement (40) einen Ringbereich (41) aufweist, von dem sich in axialer Richtung mehrere Stege (42) erstrecken, wobei die Stege (42) derart angeordnet sind, dass sie formschlüssig eine Relativ-Drehbewegung der paarweise angeordneten Eingriffelemente (31, 34) blockieren, wobei
der Kolben (20) radial außen einen ersten radialen Absatz (21) und axial gegenüberliegend einen zweiten radialen Absatz (22) sowie eine zwischen den beiden Absätzen (21, 22) ausgebildete Nut (23) aufweist, in der ein Dichtring (50) montiert ist, und wobei
der Kolben (20) ebenfalls das Armierungselement (40) aufnimmt, so dass eine Dichtlippe (51) des Dichtrings (50) in axialer Richtung durch das Armierungselement (40) abgestützt wird.

2. Aktor nach Anspruch 1, **dadurch gekennzeichnet, dass** die Spindel (11) einen Spindelkopf (14 )aufweist, der einen Endbereich des Antriebsgliedes (10) ausbildet, wobei eine Seite des Bajonettverschlusses (30) durch den Spindelkopf (14) ausgebildet ist und die andere Seite des Bajonettverschlusses (30) durch den Kolben (20) ausgebildet ist.

3. Aktor nach einem der Ansprüche 1 oder 2, **dadurch gekennzeichnet, dass** der Bajonettverschluss (30) an beiden Seiten jeweils wenigstens ein Eingriffelement (31, 34) aufweist und ein jeweiliges Eingriffelement (31, 34) einer Seite dazu eingerichtet ist, in ein Eingriffelement (31, 34) der anderen Seite des Bajonettverschlusses (30) einzugreifen oder von dem Eingriffelement (31, 34) der anderen Seite eingegriffen zu werden, so dass der Bajonettverschluss (30) wenigstens ein Paar von ineinander greifenden Eingriffelementen (31, 34) aufweist, wobei ein erstes Eingriffelement (31) eines Paares einen radialen Vorsprung (32) aufweist und ein zweites Eingriffelement (34) dieses Paares einen in axialer Richtung ausgebildeten Hinterschnitt (35) aufweist, der in zumindest einer Umfangsrichtung offen ist, wobei die radiale Weite des durch den Hinterschnitt (35) ausgebildeten Raums (36) größer oder gleich groß ist wie die radiale Erstreckung des Vorsprungs (32) des ersten Eingriffelements, so dass bei einer Relativ-Rotationsbewegung zwischen den Eingriffelementen (31, 34) dieses Paares der Vorsprung (32) des ersten Eingriffelements (31) in den vom Hinterschnitt (35) ausgebildeten Raum (36) einschwenkbar ist.

4. Aktor nach Anspruch 1, **dadurch gekennzeichnet, dass** der Dichtring (50) an einer axialen Stirnseite auf einem Umfang verteilt mehrere Anlageelemente (52) aufweist, die der axialen Abstützung des Dichtringes (50) an einem zweiten Absatz (22) des Kolbens (20) dienen.

5. Drehmoment-Übertragungseinrichtung, umfassend einen Aktor (1) gemäß einem der Ansprüche 1 bis 4 zur Realisierung eines Fluid-Volumenstroms zwecks Verlagerung eines axial verschiebbaren Kraftübertragungselements, um einen Drehmoment-Übertragungspfad mittels der Drehmoment-Übertragungseinrichtung zu öffnen oder zu schließen.

## Claims

1. An actuator (1) for actuating a torque transmission device, comprising a translationally movable drive element (10) and a slidable piston (20) of a piston-cylinder unit for the purpose of producing a fluid volumetric flow in order to actuate the torque transmission device, wherein the drive element (10) and the piston (20) are fixedly connected to each other in a form-fitting manner in the axial direction merely by means of shaped elements of the piston (20) and of the drive element (10) themselves, for the purpose of sliding of the piston (20) by means of the drive element (10), wherein the drive element (10) is a rotationally fixedly arranged and translationally displaceable spindle (11) of a spindle drive, in particular of a planetary rolling gear, **characterised in that** the shaped elements of the piston (20) and of the drive element (10) realising the mechanical connection are components of a bayonet catch (30), by means of which the piston (20) is fixed to the drive element (10),
**in that** the actuator has a reinforcing element (40) that fixes the two sides of the bayonet catch (30) in their circumferential positions in relation to one another in a force-fitting and/or form-fitting manner,
**in that** the bayonet catch (30) has at least one engagement element (31, 34) on each of the two sides, and a respective engagement element (31, 34) of one side is set up to engage in an engagement element (31, 34) of the other side of the bayonet catch (30) or to be engaged by the engagement element (31, 34) of the other side, such that the bayonet catch (30) has at least one pair of engagement elements (31, 34) engaging in one another, and **in that** the reinforcing element (40) has a ring region (41), from which a plurality of webs (42) extend in the axial direction, wherein the webs (42) are arranged in such a way that they block a relative rotational movement of
the engagement elements (31, 34) arranged in pairs in a form-fitting manner, wherein
the piston (20) has a first radial shoulder (21) radially outwardly and a second radial shoulder (22) axially opposite thereto and a groove (23) formed between the two shoulders (21, 22) in which a sealing ring (50) is mounted, and wherein
the piston (20) also receives the reinforcing element (40), such that a sealing lip (51) of the sealing ring (50) is supported in the axial direction by the reinforcing element (40).

2. The actuator according to claim 1, **characterised in that** the spindle (11) has a spindle head (14) that forms an end region of the drive element (10), wherein one side of the bayonet catch (30) is formed by the spindle head (14) and the other side of the bayonet catch (30) is formed by the piston (20).

3. The actuator according to any one of claims 1 or 2, **characterised in that** the bayonet catch (30) has at least one engagement element (31, 34) on each of the two sides, and a respective engagement element (31, 34) of one side is configured to engage in an engagement element (31, 34) of the other side of the bayonet catch (30) or to be engaged by the engagement element (31, 34) of the other side, such that the bayonet catch (30) has at least one pair of engagement elements (31, 34) engaging in one another, wherein a first engagement element (31) of a pair has a radial projection (32) and a second engagement element (34) of this pair has an undercut (35) formed in the axial direction and which is open in at least one circumferential direction, wherein the radial width of the space (36) formed by the undercut (35) is greater than or equal to the radial extent of the projection (32) of the first engagement element, such that upon a relative rotational movement between the engagement elements (31, 34) of this pair, the projection (32) of the first engagement element (31) can be pivoted into the space (36) formed by the undercut (35).

4. The actuator according to claim 1,
**characterised in that** the sealing ring (50) has multiple contact elements (52) distributed over a circumference on an axial end face, which serve to axially support the sealing ring (50) on a second shoulder (22) of the piston (20).

5. A torque transmission device, comprising an actuator (1) according to any one of claims 1 to 4 for realising a fluid volume flow for the purpose of displacing an axially displaceable force transmission element in order to open or close a torque transmission path by means of the torque transmission device.

## Revendications

1. Actionneur (1) permettant d'actionner un dispositif de transmission de couple, comprenant un organe d'entraînement (10) pouvant se déplacer en translation et un piston (20) mobile d'une unité de piston et de cylindre afin de générer un débit volumétrique de fluide pour actionner le dispositif de transmission de couple, dans lequel l'organe d'entraînement (10) et le piston (20) sont reliés fermement l'un à l'autre par liaison de complémentarité de forme dans la direction axiale uniquement, par l'intermédiaire de pièces moulées du piston (20) ainsi que de l'organe d'entraînement (10) lui-même, afin de déplacer le piston (20) au moyen de l'organe d'entraînement (10), dans lequel l'organe d'entraînement (10) est une broche (11), agencée de manière fixe en rotation et pouvant se déplacer en translation, d'un entraînement à broche, en particulier d'un engrenage planétaire, **caractérisé en ce que** les pièces moulées du piston (20) et de l'organe d'entraînement (10), réalisant la liaison mécanique, sont des composants d'une fixation à baïonnette (30), à l'aide duquel le piston (20) est fixé à l'organe d'entraînement (10),
que l'actionneur présente un élément de renforcement (40), lequel fixe par liaison de complémentarité de force et/ou de forme l'un par rapport à l'autre les deux côtés de la fixation à baïonnette (30) dans leurs positions circonférentielles l'un par rapport à l'autre,
que la fixation à baïonnette (30) présente des deux côtés respectivement au moins un élément de prise (31, 34) et un élément de prise (31, 34) respectif d'un côté est conçu pour venir en prise avec un élément de prise (31, 34) de l'autre côté de la fixation à baïonnette (30) ou pour être mis en prise par l'élément de prise (31, 34) de l'autre côté, de telle sorte que la fixation à baïonnette (30) présente au moins une paire d'éléments de prise (31, 34) venant en prise l'un avec l'autre, et que l'élément de renforcement (40) présente une zone annulaire (41) à partir de laquelle s'étendent dans la direction axiale une pluralité d'entretoises (42), dans lequel les entretoises (42) sont agencées de telle sorte qu'elles bloquent par liaison de complémentarité de forme un mouvement de rotation relatif
des éléments de prise (31, 34) agencés par paires, dans lequel
le piston (20) présente un premier épaulement (21) radial radialement vers l'extérieur et un second épaulement (22) radial axialement opposé ainsi qu'une rainure (23), formée entre les deux épaulements (21, 22), dans laquelle est montée une bague d'étanchéité (50), et dans lequel
le piston (20) reçoit également l'élément de renforcement (40) de telle sorte qu'une lèvre d'étanchéité (51) de la bague d'étanchéité (50) est soutenue dans la direction axiale par l'élément de renforcement (40).

2. Actionneur selon la revendication 1, **caractérisé en ce que** la broche (11) présente une tête de broche (14), laquelle forme une zone d'extrémité de l'organe d'entraînement (10), dans lequel un côté de la fixation à baïonnette (30) est formé par la tête de broche (14) et l'autre côté de la fixation à baïonnette (30) est formé par le piston (20).

3. Actionneur selon l'une des revendications 1 ou 2, **caractérisé en ce que** la fixation à baïonnette (30) présente des deux côtés respectivement au moins un élément de prise (31, 34) et un élément de prise (31, 34) respectif d'un côté est conçu pour venir en prise avec l'élément de prise (31, 34) de l'autre côté de la fixation à baïonnette (30) ou pour être mis en prise par l'élément de prise (31, 34) de l'autre côté, de telle sorte que la fixation à baïonnette (30) présente au moins une paire d'éléments de prise (31, 34) venant en prise l'un avec l'autre, dans lequel un premier élément de prise (31) d'une paire présente une saillie (32) radiale et le second élément de prise (34) de ladite paire présente une contre-dépouille (35), formée dans la direction axiale, laquelle est ouverte dans au moins une direction circonférentielle, dans lequel la largeur radiale de l'espace (36) formé par la contre-dépouille (35) est supérieure ou égale à l'étendue radiale de la saillie (32) du premier élément de prise, de telle sorte que lors d'un mouvement de rotation relatif entre les éléments de prise (31, 34) de cette paire, la saillie (32) du premier élément de prise (31) peut pivoter dans l'espace (36) formé par la contre-dépouille (35).

4. Actionneur selon la revendication 1,
**caractérisé en ce que** la bague d'étanchéité (50) présente une pluralité d'éléments d'appui (52) répartis sur une circonférence sur une face d'extrémité axiale, lesquels servent à soutenir axialement la bague d'étanchéité (50) sur le second épaulement (22) du piston (20).

5. Dispositif de transmission de couple, comprenant un actionneur (1) selon l'une quelconque des revendications 1 à 4 permettant de réaliser un débit volumique de fluide afin de déplacer un élément de transmission de force mobile axialement, afin d'ouvrir ou de fermer une voie de transmission de couple au moyen du dispositif de transmission de couple.
